# EUROPEAN PATENT SPECIFICATION

(11) **EP 1 407 503 B1**
(45) Date of publication and mention of the grant of the patent: **21.02.2007**
(21) Application number: 02727575.9
(22) Date of filing: 24.04.2002
(51) Int. Cl.: H01M 2/14, H01M 2/16

(54) **BATTERY SEPARATORS**
BATTERIETRENNVORRICHTUNGEN
SEPARATEURS DE BATTERIE

(30) Priority: 10.05.2001 GB 0111428; 10.05.2001 GB 0111427; 10.05.2001 GB 0111429; 10.05.2001 GB 0111426; 10.05.2001 GB 0111425
(43) Date of publication of application: 14.04.2004
(73) Proprietor: LENZING AKTIENGESELLSCHAFT, 4860 Lenzing (AT)
(72) Inventor: MACGLASHAN, Graham, Wigton, Cumbria CA7 9BG (GB); MARSHALL, Colin, Wigton, Cumbria CA7 9BG (GB); READ, Simon, Wigton, Cumbria CA7 9BG (GB)
(74) Representative: Nemec, Harald
(86) International application number: PCT/EP2002/004470
(87) International publication number: WO 2002/091500

(56) References cited:
- EP-A- 0 574 870
- WO-A-97/37392
- US-A- 5 700 600
- US-A- 6 159 634

## Description

The invention relates to batteries and separators for use therein.

Batteries, such as alkaline batteries, are commonly used as energy sources. Generally, alkaline batteries have a cathode, an anode, a separator and an electrolytic solution. The cathode is typically formed of manganese dioxide, carbon particles and a binder. The anode can be formed of a gel including zinc particles. A separator is usually disposed between the cathode and the anode. The electrolytic solution, which is dispersed throughout the battery, can be a hydroxide solution. In the art the term "alkaline battery" is a commonly used to refer to a specific type of primary battery having the specific chemistry (gelled zinc / aqueous KOH / MnO₄). However as used herein the term "alkaline battery" is used more generally to mean any batteries which comprise an alkaline electrolyte. In fact it will be appreciated that the separators described herein may be used in any type of battery (e.g. primary or secondary) where a separator would be useful.

The separator is designed to allow good electrolyte ion flow between the anode and the cathode whilst reducing dendrite and soft shorting between the anode and cathode. Dendrite shorting refers to the situation where soluble salts or ions containing alkaline, alkaline earth or transition metals, such as potassium zincate, migrate between the electrodes of the battery and is reduced to the metal, e.g. zinc, on charging of the battery, resulting in an electrical connection between the anode and the cathode which can short out the external load. Soft shorting refers to the case when active material becomes solublised in the electrolyte solution and migrates away from the electrode, resulting in loss of capacity or reaction with active material of the other electrode. Zincate is a type of zinc oxide compound that can be formed in an alkaline battery under certain circumstances.

US 6159634 (Duracell) describes batteries having a thin cellulose film as a separator.. This reference teaches that thinness is the major requirement for improved separator performance. US 6159634 does not appreciate many of the other properties necessary to provide a good separator and thus teaches that in the limit infinitely thin films would be acceptable. However thinness in the separator is not the only requirement to optimise battery performance. Not all thinner separators will exhibit better properties for battery used if one fails to consider and balance other competing properties required for the separator.

Thinner separators occupy a smaller volume inside the battery cell which increases the volume available for cathode material, anode material and/or electrolytic solution (active materials) in a batteries of a given standard size (e.g. AA, AAA, AAAA, C or D). The difference may be small as reducing the thickness of cellulose film component of the separator from 25 microns to 21 microns reduces the separator volume in a typical battery by about 14%, which this leads to an increase in the volume of active material of only 1%. A thinner film may also have a lower ionic resistance when wet. These effects together can result in a small improvement in battery performance if one compares thin separators with thicker ones identical apart from thickness.

However as one makes a thinner conventional separator there are some disadvantages which increase the thinner the separator. The separator has a lower durability and strength, the separator web is more prone to break during production; the time taken to slit the separator (and its thinner component layers) is increased; production efficiency and throughput is reduced; and/or there is a reduced conversion efficiency of the component layers into separator (and separator into finished batteries). All of these factors can increase the production cost of using thinner separators and outweigh the small advantage in battery performance so gained.

A suitable separator comprises a biopolymer film, such as cellulosic film, especially a regenerated cellulose film as the porous membrane. One suitable separator construction comprises a laminate of a wicking layer adhered to a flat porous membrane. The membrane is selected with an average pore size which allows transport of electrolyte ions there across but blocks migration of undesirable ions such as zincate to thereby reduce dendrite and soft shorting. An example of a separator suitable for use in primary batteries is a non-woven layer comprising fibres laminated to a cellulosic film membrane. However any suitable configuration of separator may also be used for example in secondary batteries a cellulose film either alone or laminated to an asbestos mat and/or a porous polyolefin may be preferred.

The mechanical and physical properties of a separator laminate and both its component non woven and cellulose film layers must be such that they are durable when dry (so they can be handled and laminated as a web on a production machine). They also require sufficient strength and integrity when wet (especially in the alkaline electrolyte of an alkaline battery), especially if the separator is to be used in a rechargeable battery where it must survive the rigours of repeated cycles of charging and discharging. So a thinner separator even if it achieves low wet ionic resistance or allows greater volume of active material in the battery, it must also exhibit acceptable mechanical and other properties to provide the same or better overall battery performance than that obtained by a thicker film.

So the above factors must be balanced when producing thin separator film. Thus it can be seen that the demands on separator properties are varied and complex and cannot be reduced to a simplistic "the thinner the better" without considering other factors. It is desired to improve the properties of separators and the component layers thereof to overcome some or all of the problems with separators, for example with thin separators.

The applicant has surprisingly discovered that improved, optionally thinner, porous membrane (e.g. of cellulose film) can be made with good mechanical properties; and/or the optimal balance of certain separator properties can solve some or all of the problems with prior art separators during production and/or use.

Therefore broadly in accordance with the present invention there is provided a battery separator, according to independent claim 1.

Preferably the TD dry tensile strength of the membrane is greater than about 130 Nmm⁻², more preferably greater than about 140 Nmm⁻²; most preferably greater than about 150 Nmm⁻².

The wet ionic resistance (WIR) values given herein are those measured by conventional techniques known to those skilled in the art from an aqueous solution containing 40% potassium hydroxide (the WIR will vary at different KOH concentrations).

In the oxidation test, the film was immersed for four hours in a bath of sodium hydroxide and hydrogen peroxide. This test simulates in a few hours; many years of exposure to the conditions in an alkaline battery. The DP can be measured and/or calculated by any suitable technique such as GPC.

Preferably, the battery separator, comprises a porous membrane having a mean thickness when dry of less than about 15 microns.

Preferably the membrane films have a mean dry thickness from about 5 microns to about 14 microns, more preferably from about 8 microns to about 12 microns.

Preferably the membrane has a mean thickness when dry of less than about 11 microns.

Preferably these membrane films have a tensile strength of greater than about 200 Nmm⁻²; more preferably greater than about 250 N/mm², most preferably greater than about 300 N/mm² and of the dry membrane (measured in the machine direction (MD) of the membrane web) is greater than about 200 Nmm⁻², more preferably greater than about 250 Nmm⁻²; most preferably greater than about 280 Nmm⁻²; advantageously greater than about 300 Nmm⁻², and more advantageously greater than about 350 Nmm⁻².

Preferably the wet ionic resistance of the membrane is less than about 20 mΩ.cm².

Further aspects of the invention and preferred features and integers thereof are given in the claims herein which are incorporated by reference into this specification.

Separators of and used in the present invention comprises material(s) that can form a porous preferably semi-permeable sheet and are substantially inert to the electrolytic solution and capable of reducing dendrite shorting so the separator allows ion transport thereacross for good ion flow between the cathode and anode. Usually, the separator and any component layers thereof do not include wettable material coatings, metal coatings or fillers such as, for example, inorganic particles.

A typical separator construction comprises a laminate of a wicking layer (for example a nonwoven layer comprising fibres) adhered to a porous membrane (for example a cellulosic film). In a preferred embodiment, the laminate is made according to the method disclosed in U.S 4,902,590.

As used herein the term "regenerated cellulose" is used to encompass films referred to as "coagulated" were the cellulose film is produced from a dispersion or solution containing cellulose itself (such as NMMO or LiCl / DMA). Cellulosic refers both to cellulose itself and suitable derivatives thereof.

The cellulosic film used in the present invention is regenerated from a cellulosic dispersion in a fluid which N-methylmorpholine N-oxide (NMMO) and suitable derivatives thereof.

More preferred biopolymer films used as the separator membrane comprise cellulose which is substantially continuous, more preferably non-woven and/or entangled, in structure, most preferably non woven. Especially preferred films comprises non-microbial cellulose.

Conveniently films used in the present invention substantially comprise cellulose from a wood source and/or cotton linters, most preferably at least 90% of the cellulosic material is from a wood source.

The membrane layer may include one or more plasticizers, but, typically, such plasticizers are not included. Generally the membrane is a porous layer that does not include wettable material coatings, metal coatings or fillers such as, for example, inorganic particles.

### Adhesive

The adhesive may comprise any material that is substantially inert to the electrolytic solution and that can form a physical and/or chemical bond between the wicking layer and porous membrane sufficient that separator forms an integrated unit without increasing the barrier to good ion flow. Suitable materials especially for use in alkaline batteries, comprise polyacrylic acids (such as that available commercially from B. F. Goodrich under the trade name Carbopol 940), grafted starch materials (such as that available commercially from Grain Processing Corporation, Muscatine, Iowa under the trade name Waterlock A221), carboxymethylcellulose and mixtures thereof. The amount of material in the adhesion layer is preferably less than about 6 gm⁻², more preferably from about 1 gm⁻² to about 5 gm⁻², and most preferably about 3 gm⁻²

### Wicking layer

The wicking layer is designed to improve the flow of electrolyte through the membrane. Preferred wicking layers may be formed of one or more nonwoven materials (such as cellulose, PVA, polyamides, polysulphones and mixtures thereof) optionally having fibres thereon or optionally perforated non porous film such as polyolefinic film. More preferably the nonwoven layer comprises a matrix of PVA fibres; PVA binder; cellulose fibres (for example those fibres available commercially from Courtalds under the trade marks Tencel and/or Lyocel) and/or rayon fibres. The cellulose fibres may be about 1.5 denier at 6 millimetres long, and the PVA fibres may be about 0.5 denier at 6 millimetres long. Optionally the non woven layer may comprise from about 20 % to about 40 % (for example about 30%) by weight of rayon and/or cellulose fibres; from about 55 % to about 65 % by weight (for example about 57%) of PVA fibres; and/or from about 5 % to about 15 % (for example 13%) by weight of PVA binder.

Reference is made to US 6,159,634 for the other preferred features of the separators (and components thereof) and batteries of the invention. The preferred batteries are alkaline batteries that have a thin separator for example with a general construction as disclosed in any of the embodiments or drawings of US 6159634 (Duracell).

The invention will now be illustrated by the following non-limiting examples.

### Example 1

### Cellulose Film

A regenerated cellulose film was prepared by the known method of regeneration from a dope bath comprising 13% cellulose in N-methyl-morpholine N-oxide (also known as NMMO) and as described in for example US 4,246,221 and elsewhere. The film was extruded through a slot die under the following conditions to obtain a porous membrane of the invention having the properties described herein: die gap = 50 microns; dope flow rate 112 litres per hour; MD draw ratio 0.51; and TD draw ratio 3.0. This gave a cellulose film having a dry thickness of 12 microns with a tensile strength in the TD of 122 N/mm²; and a wet ionic resistance of about 27 mΩ.cm². After this cellulose film was immersed for four hours in a bath of sodium hydroxide and hydrogen peroxide the DP of the film was determined to be greater than 500 chain units.

### Example 2

### Battery and battery separator

A battery and a preferred laminated separator of the invention may be prepared as described in any of the Examples of US 6519634 (Duracell) where the UCB P300 cellulose films used therein are replaced by with the cellulose film of the invention described in Example 1. The battery separators so formed exhibit superior performance compared to prior art separators. Without wishing to be bound by any mechanism it is believed that this may be due to the high DP of the film of Example 1 which has been stentered (stretched in both the TD and MD).

## Claims

1. A battery separator, comprising: a flat, porous membrane comprising a cellulosic film which is regenerated from N-methylmorpholine-N-oxide and suitable derivatives thereof having a mean thickness less than 25 µm thick where the membrane has all four of the following further properties:
a) a tensile strength when dry, as measured in the transverse direction (TD) of the membrane web, of greater than 120 Nmm².
b) a wet ionic resistance of less than 30 mΩ.cm²;
c) a degree of polymerisation (DP) of greater than 350 chain units after being immersed for four hours in a bath of sodium hydroxide and hydrogen peroxide and
d) a tensile strength when dry as measured in the machine direction (MD) of the membrane, of greater than 200 Nmm⁻².

2. A separator according to claim 1 in which the TD strength of the membrane is greater than 130 Nmm⁻².

3. A separator according to claim 1 in which the TD strength is greater than 140 Nmm⁻².

4. A separator according to claim 1 in which the TD strength is greater than 150 Nmm⁻².

5. A separator according to one of claims 1-4 with a resistance less than 20 mΩ.cm².

6. A separator according to claim 1 which has a DP of greater than 500 chain units.

7. A separator according to any preceding claim, in which the membrane has a mean dry thickness of less than 15 µm

8. A separator according to claim 7 in which the membrane is less than 11 µm thick.

9. A separator according to any preceding claim, in which the membrane has a mean dry thickness of from 5 µm to 14 µm.

10. A separator according to claim 9 in which the membrane is from 8 µm to 12 µm thick.

11. A separator according to any preceding claim in which the MD strength is greater than 250 Nmm⁻².

12. A separator according to claim 11 in which the MO strength is greater than 280 Nmm⁻².

13. A separator according to claim 12 in which the MD strength is greater than 300 Nmm⁻².

14. A separator according to claim 13 in which the MD strength is greater than 350 Nmm⁻².

15. A separator according to any preceding claim, in which the cellulose film is regenerated from a dope bath comprising a concentration of at least 10% by weight of cellulose In NMMO.

16. A separator according to claim 15 in which the cellulose concentration in the dope is from 10% to 15%.

17. A separator according to claim 16 in which the cellulose concentration in the dope is 13%.

18. A separator according to any preceding claim, in which the cellulose film is regenerated under all four of the following conditions:
a) extrusion from the regenerating fluid at a flow rate of at least 100 litres per hour:
b) extrusion through a slot-die of gap less than 60 µm;
c) a web draw ratio In the machine direction of at least 0.4 and
d) a web draw ratio In the transverse direction of at least 2.5.

19. A separator as claimed in any preceding claim which further comprises a wicking layer to Improve the flow, of electrolyte ions through the membrane.

20. A separator as claimed in claim 19 where the wicking layer comprises one or more non-woven materials optionally having fibres thereon.

21. A separator as claimed in claim 19 or 20 where the wicking layer comprises cellulose, PVA, polyamides, polysulphones, perforated polyolefinic film and/or mixtures thereof.

22. A separator as claimed in any of claims 19 to 21 in which the wicking layer is laminated to the membrane with an inert adhesive,

23. A separator as claimed in claim 22, in which the adhesive comprises polyacrylic acid grafted starch materials, carboxymethyl cellulose and/or mixtures thereof.

24. A battery comprising a separator as claimed in any of claims 1 to 23.

25. A battery powered device comprising at least one battery as claimed in claim 24.

26. Use of separator as claimed in any of claims 1 to 23, for the purpose of reducing dendrite and/or soft shorting in a battery.

## Patentansprüche

1. Batterieseparator, umfassend: eine flache poröse Membran, die einen Cellulosefilm umfasst, welcher aus N-Methylmorpholin-N-oxid und geeigneten Derivaten davon regeneriert ist, wobei die Membran eine mittlere Dicke von weniger als 25 µm aufweist und die Membran alle vier der folgenden weiteren Eigenschaften besitzt:
a) eine Zugfestigkeit im trockenen Zustand, die in Querrichtung (TD) des Membrangewebes gemessen wird und größer als 120 Nmm⁻² ist;
b) einen Ionenwiderstand im feuchten Zustand von weniger als 30 mΩ.cm²;
c) einen Polymerisationsgrad (DP) von mehr als 350 Kettenbausteinen nach vierstündigem Eintauchen in einem Bad von Natriumhydroxid und Wasserstoffperoxid, und
d) eine Zugfestigkeit im trockenen Zustand, die in Arbeitsrichtung (MD) der Membran gemessen wird und größer als 200 Nmm⁻² ist.

2. Separator gemäß Anspruch 1, wobei die TD-Festigkeit der Membran größer als 130 Nmm⁻² ist.

3. Separator gemäß Anspruch 1, wobei die TD-Festigkeit größer als 140 Nmm⁻² ist.

4. Separator gemäß Anspruch 1, wobei die TD-Festigkeit größer als 150 Nmm⁻² ist.

5. Separator gemäß einem der Ansprüche 1-4, welcher einen Widerstand von weniger als 20 mΩ.cm² aufweist.

6. Separator gemäß Anspruch 1, welcher einen DP von mehr als 500 Kettenbausteinen aufweist.

7. Separator gemäß irgendeinem der vorhergehenden Ansprüche, wobei die Membran eine mittlere Trockendicke von weniger als 15 µm aufweist.

8. Separator gemäß Anspruch 7, wobei die Membran weniger als 11 µm dick ist.

9. Separator gemäß irgendeinem der vorhergehenden Ansprüche, wobei die Membran eine mittlere Trockendicke von 5 µm bis 14 µm aufweist.

10. Separator gemäß Anspruch 9, wobei die Membran 8 µm bis 12 µm dick ist.

11. Separator gemäß irgendeinem der vorhergehenden Ansprüche, wobei die MD-Festigkeit größer als 250 Nmm⁻² ist.

12. Separator gemäß Anspruch 11, wobei die MD-Festigkeit größer als 280 Nmm⁻² ist.

13. Separator gemäß Anspruch 12, wobei die MD-Festigkeit größer als 300 Nmm⁻² ist.

14. Separator gemäß Anspruch 13, wobei die MD-Festigkeit größer als 350 Nmm⁻² ist.

15. Separator gemäß irgendeinem der vorhergehenden Ansprüche, wobei der Cellulosefilm aus einem Spinnbad regeneriert ist, das eine Konzentration von zumindest 10 Gew.% Cellulose in NMMO aufweist.

16. Separator gemäß Anspruch 15, wobei die Cellulosekonzentration in der Spinnlösung 10 bis 15% beträgt.

17. Separator gemäß Anspruch 16, wobei die Cellulosekonzentration in der Spinnlösung 13% beträgt.

18. Separator gemäß irgendeinem der vorhergehenden Ansprüche, wobei der Cellulosefilm unter allen vier der folgenden Bedingungen regeneriert wird:
a) Extrusion aus der Regenerationsflüssigkeit mit einer Durchflussmenge von mindestens 100 Litern pro Stunde;
b) Extrusion durch eine Schlitzdüse mit einem Spalt, der kleiner als 60 µm ist;
c) ein Gewebe-Streckverhältnis in Arbeitsrichtung von mindestens 0,4 und
d) ein Gewebe-Streckverhältnis in Querrichtung von mindestens 2,5.

19. Separator, wie in irgendeinem der vorhergehenden Ansprüche beansprucht, welcher weiters eine Schicht mit Saugwirkung umfasst, um den Elektrolytionenfluss durch die Membran zu verbessern.

20. Separator, wie in Anspruch 19 beansprucht, wobei die Schicht mit Saugwirkung ein oder mehrere Vliesmaterialien, an denen gegebenenfalls Fasern vorhanden sind, umfasst.

21. Separator, wie in Anspruch 19 oder 20 beansprucht, wobei die Schicht mit Saugwirkung Cellulose, PVA, Polyamide, Polysulfone, einen perforierten Polyolefinfilm und/oder Mischungen davon umfasst.

22. Separator, wie in einem der Ansprüche 19 bis 21 beansprucht, wobei die Schicht mit Saugwirkung mit einem inerten Klebstoff an der Membran angebracht ist.

23. Separator, wie in Anspruch 22 beansprucht, wobei der Klebstoff mit Polyacrylsäure gepfropfte Stärkematerialien, Carboxymethylcellulose und/oder Mischungen davon umfasst.

24. Batterie, umfassend einen Separator, wie in einem der Ansprüche 1 bis 23 beansprucht.

25. Batteriebetriebene Vorrichtung, umfassend zumindest eine Batterie, wie in Anspruch 24 beansprucht.

26. Verwendung eines Separators, wie in einem der Ansprüche 1 bis 23 beansprucht, zum Zwecke der Reduktion von Dendrit und/oder eines partiellen Kurzschlusses in einer Batterie.

## Revendications

1. Séparateur de batterie, comprenant : une membrane plate et poreuse comprenant un film de cellulose qui est régénéré du N-méthylmorpholine-N-oxyde et des dérivés appropriés de celui-ci présentant une épaisseur moyenne inférieure à 25 µm d'épaisseur dans lequel la membrane présente l'ensemble des quatre propriétés supplémentaires suivantes :
a) une résistance à la traction quand elle est sèche, telle que mesurée dans la direction transversale (DT) de la toile de membrane, supérieure à 120 Nmm⁻² ;
b) une résistance ionique à l'état humide inférieure à environ 30 mΩ.cm² ;
c) un degré de polymérisation (DP) supérieur à 350 unités de chaîne après avoir été immergée pendant quatre heures dans un bain d'hydroxyde de sodium et de peroxyde de sodium, et ;
d) une résistance à la traction quand elle est sèche, telle que mesurée dans la direction de la machine (DM) de la membrane, supérieure à 200 Nmm⁻².

2. Séparateur selon la revendication 1, dans lequel la résistance DT de la membrane est supérieure à 130 Nmm⁻².

3. Séparateur selon la revendication 1, dans lequel la résistance DT de la membrane est supérieure à 140 Nmm⁻².

4. Séparateur selon la revendication 1, dans lequel la résistance DT de la membrane est supérieure à 150 Nmm⁻².

5. Séparateur selon l'une quelconque des revendications 1 à 4 avec une résistance inférieure à 20 mΩ.cm².

6. Séparateur selon la revendication 1, qui présente un DP supérieur à 500 unités de chaîne.

7. Séparateur selon l'une quelconque des revendications précédentes, dans lequel la membrane présente une épaisseur moyenne quand elle est sèche inférieure à 15 µm.

8. Séparateur selon la revendication 7, dans lequel la membrane est inférieure à environ 11 µm d'épaisseur.

9. Séparateur selon l'une quelconque des revendications précédentes, dans lequel la membrane présente une épaisseur moyenne quand elle est sèche de 5 µm à 14 µm.

10. Séparateur selon la revendication 9, dans lequel la membrane est de 8 µm à 12 µm d'épaisseur.

11. Séparateur selon l'une quelconque des revendications précédentes, dans lequel la résistance DM est supérieure à 250 Nmm⁻².

12. Séparateur selon la revendication 11, dans lequel la résistance DM est supérieure à 280 Nmm⁻².

13. Séparateur selon la revendication 12, dans lequel la résistance DM est supérieure à 300 Nmm⁻²

14. Séparateur selon la revendication 13, dans lequel la résistance DM est supérieure à 350 Nmm⁻².

15. Séparateur selon l'une quelconque des revendications précédentes, dans lequel le film de cellulose est régénéré d'un bain dopant comprenant une concentration d'au moins 10 % en poids de cellulose dans NMMO.

16. Séparateur selon la revendication 15, dans lequel la concentration de cellulose dans le dopant est de 10 % à 15%.

17. Séparateur selon la revendication 16, dans lequel la concentration de cellulose dans le dopant est de 13 %.

18. Séparateur selon l'une quelconque des revendications précédentes, dans lequel le film de cellulose est régénéré sous l'ensemble des quatre conditions suivantes :
a) extrusion du fluide de régénération à un débit d'au moins 100 litres par heure ;
b) extrusion au travers d'une filière plate d'un trou inférieur à 60 µm ;
c) un rapport de tension dans la direction de la machine d'au moins 0,4 et ;
d) un rapport de tension dans la direction transversale d'au moins 2,5.

19. Séparateur selon l'une quelconque des revendications précédentes, qui comprend en outre une couche buvard pour améliorer la circulation des ions électrolytes dans la membrane.

20. Séparateur selon la revendication 19, dans lequel la couche buvard comprend un ou plusieurs matériaux non-tissés incorporant éventuellement des fibres.

21. Séparateur selon la revendication 19 ou la revendication 20, dans lequel la couche buvard comprend de la cellulose, du PVA, des polyamides, des polysulfones, un film de polyoléfine perforé et/ou des mélanges de ceux-ci.

22. Séparateur selon l'une quelconque des revendications 19 à 21, dans lequel la couche buvard est laminée sur la membrane avec un adhésif inerte.

23. Séparateur selon la revendication 22, dans lequel l'adhésif comprend des matériaux d'amidon greffé d'acide polyacrylique, de la carboxyméthylcellulose et/ou des mélanges de ceux-ci.

24. Batterie comprenant un séparateur selon l'une quelconque des revendications 1 à 23.

25. Dispositif alimenté par batterie comprenant au moins une batterie selon la revendication 24.

26. Utilisation d'un séparateur selon l'une quelconque des revendications 1 à 23 afin de réduire la dendrite et/ou un court-circuit partiel dans une batterie.
